**Europäisches Patentamt**

**European Patent Office**

**Office européen des brevets**

(11) Veröffentlichungsnummer: **0 226 144**
**A2**

## (12) EUROPÄISCHE PATENTANMELDUNG

(21) Anmeldenummer: **86116932.4**

(22) Anmeldetag: **05.12.86**

(51) Int. Cl.⁴: **G06K 1/12**

(30) Priorität: **14.12.85 DE 3544299**

(43) Veröffentlichungstag der Anmeldung:
**24.06.87 Patentblatt 87/26**

(84) Benannte Vertragsstaaten:
**AT BE CH DE ES FR GB IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Horn, Klaus, Dr. Dipl.-Chem.**
**Lessingstrasse 53**
**D-6238 Hofheim/Ts(DE)**
Erfinder: **Schulz, Hans-Joachim, Dipl.-Ing.**
**Hauberrisser Strasse 21**
**D-6200 Wiesbaden(DE)**
Erfinder: **Sader, Georg**
**Tannenblick 3**
**D-6274 Hünstetten-Bechtheim(DE)**
Erfinder: **Röthe, Michael, Dipl.-Ing.**
**Bert-Brecht-Strasse 47**
**D-6200 Wiesbaden(DE)**

(54) **Verfahren zum Herstellen eines Eich- und Prüfstandardelements und nach dem Verfahren hergestelltes Eich- und Prüfstandardelement.**

(57) Zum Herstellen eines Eich-und Prüfstandardelements für die Eichung und Prüfung von Ablese-und Meßgeräten für Strichcodierungen und sonstigen Prüf-und Testteilungen wird auf einem Keramiksubstrat in einem chemisch abscheidenden Kupferbad eine Kupferschicht aufgetragen, entfettet und anschließend eine Fotoresistschicht aufgebracht, die durch eine Belichtungsmaske hindurch belichtet wird. Diese Maske trägt ein Abbild der auf die Oberfläche des Keramiksubstrats zu übertragenden strahlungsdurchlässigen und strahlungsundurchlässigen Bereiche eines Musters. Nach dem Entfernen der Maske wird die Fotoresistschicht entwickelt, in einer Metallchloridlösung die freigelegten Zonen der Kupferschicht geätzt und die restliche Fotoresistschicht durch Strippen entfernt. Die freigelegten, geätzten Zonen der Kupferschicht werden in einem Metallbad mattschwarz eingefärbt. Zuletzt werden die Leiterbahnen noch schutzlackiert. Das auf diese Weise hergestellte Eich-und Prüfstandardelement besteht aus einem Keramiksubstrat 1 als Träger, das einen Anteil von 96 bis 97 % $Al_2O_3$ enthält. Die Stärke des Elements beträgt 0,635 bis 1,270 mm und die Abmessungen können von 20 mm Kantenlänge bis zu einer Größe von 100 × 100 mm reichen.

FIG.4

## Verfahren zum Herstellen eines Eich-und Prüfstandardelements und nach dem Verfahren hergestelltes Eich-und Prüfstandardelement

Die Erfindung betrifft ein Verfahren zum Herstellen eines Eich-und Prüfstandardelements für die Eichung und Prüfung von Ablese-und Meßgeräten sowie ein nach dem Verfahren hergestelltes Eich-und Prüfstandardelement.

Für die maschinenlesbare Kennzeichnung von Waren, insbesondere Lebensmittelartikeln, die in den verschiedensten Formen und Materialien verpackt sind, von Büchern und sonstigen Massenartikeln, setzen sich im zunehmenden Maße international eingeführte Codes durch, die im allgemeinen Strichcodes sind, die durch unterschiedliche Strichstärken, -längen, -abstände u.dgl. mehr, verschlüsselte Angaben über Ursprungsland, Artikelnummern, Preisangaben sowie weitere Daten enthalten. Im Falle von Codes für die Kennzeichnung von Büchern, beispielsweise Taschenbüchern, werden vor allem solche Angaben wie Verleger, Preis, Titel, Erscheinungsjahr, Auflagenummer, Sprache u. dgl. verschlüsselt.

Beim Maschinenlesen dieser Codes, beispielsweise in sogenannten Scanner-Kassen, werden diese Angaben entschlüsselt und im Klartext auf den Rechnungsbelegen ausgedruckt sowie in vielen Fällen auch gleichzeitig an einen Zentralrechner geleitet, der die gesamte Warenlagerhaltung verwaltet. Neben den festeingebauten Scannern in Datenkassen werden auch Lesestifte zum Entschlüsseln der Strichcodes eingesetzt, wobei diese Lesestifte über biegsame Kabel mit der Datenkasse und auch noch zusätzlich mit einem Bildschirm verbunden sein können.

Die Spezifikationen zum Druck der verschiedenen Codes sehen dunkle Striche bzw. Balken und helle Zwischenräume vor, wobei jedoch die Kontrastvorgaben nur für den Wellenlängenbereich gelten, in dem die zur Decodierung eingesetzte Lichtquelle arbeitet. Die in Datenkassen eingebauten Scanner arbeiten mit Laserstrahlen, woraus sich ergibt, daß die Farbangaben für hell und dunkel sich auf den Wert der Wellenlänge beziehen müssen, die der Laser erzeugt. Dies bedeutet, daß in dem Strichcode die Zwischenräume für die Abtastung durch den Laser "hell" sind, wenn die Zwischenräume eine Farbe haben, die der Wellenlänge des Lasers entspricht. Die anderen Bereiche des Strichcodes, beispielsweise die Balken, erscheinen dann für das Laserlicht "dunkel". Diese Überlegungen führen beispielsweise bei dem Verpackungsmaterial Glas dazu, daß das Glasmaterial als solches, welches die Laserstrahlen nicht reflektiert, sondern an nichtbedruckten Stellen durchläßt, Balken-bzw. Strichfunktion übernimmt. Die hellen Zwischenräume werden dann in einer Farbe, die dem Laserlicht entspricht, auf das Glasmaterial aufgedruckt.

Für die Verpackungsindustrie, die Faltschachteln herstellt, werden Strichcodes im allgemeinen von Druckereien bezogen. Für kleine Auflagen von Strichcodes sind Etikettendrucker für Strichcode-Etiketten aus Papier, Metall, Kunststoff auf dem Markt, die als Thermodrucker, Matrixdrucker, Laserdrucker arbeiten. Zum Messen und Prüfen der gedruckten Strichcodes sind entsprechende Meß-und Prüfgeräte vorhanden, die auch Farbkontrastmessungen ermöglichen.

Für die Artikelnumerierung haben sich weltweit, mit Ausnahme der Vereinigten Staaten von Amerika, die weitgehend ähnlich aufgebauten EAN-und JAN-Strichcodes durchgesetzt, die Grundlage der EUROPÄISCHEN-ARTIKEL-NUMERIERUNG und der JAPANISCHEN-ARTIKEL-NUMERIERUNG bilden und von der International Article Numbering Association geschaffen wurden.

Bei der Druckherstellung der Strichcodierung ist eine Streuung der Strichcode-Qualität unvermeidbar, soll jedoch so klein wie möglich gehalten werden, um eine möglichst hohe maschinelle Klartextlesung der Strichcodierungen zu erreichen. Der Erfolg der maschinellen Lesung hängt jedoch nicht allein von der Strichcode-Qualität ab, sondern auch von den eingesetzten Lesegeräten für die Strichcodes, bei denen beispielsweise Leistungsschwankungen durch Ermüdung einzelner Komponenten, wie des Lasers, der Versorgungsspannungsstabilisierung u.dgl. auftreten können. Des weiteren sind in der Praxis auch äußere Einflüsse auf den Strichcode, beispielsweise durch Verschmutzung des Verpackungsmaterials im Bereich des Strichcodes, wirksam, die die Lesbarkeit des Strichcodes einschränken.

In der Druck-und Reproduktionstechnik werden für Eich-und Qualitätsprüfzwecke Gitterteilungen, Belichtungstestkeile und dgl. Standards verwendet, die ähnlich den Strich-oder Balkencodes aufgebaut sind.

Standard-, Strich-und Testplatten auf Glasträgern sind bekannt, die aus lichtdurch-und lichtundurchlässigen Zonen für polychromatisches Licht, d.h. weißes Licht, bestehen. Laser, die eine bestimmte Wellenlänge aussenden, sind als Strahlungsquellen für das Auslesen der Standard-, Strich-und Testplatten im allgemeinen wenig geeignet, da die Kontrastunterschiede zwischen dem für weißes Licht transparenten Glas und den für weißes Licht undurchlässigen Gitterteilungen und Linien-bzw. Balkenmustern der Platten für das Laserlicht ungenügend sind.

Bei den Lese-und Prüfgeräten für Strichcodierungen, die mit polychromatischem Licht einer weißen Lichtquelle oder mit monochromatischem Licht eines Lasers arbeiten, kann es aufgrund von Leistungsschwankungen einzelner Komponenten des Geräts zu Fehlern bei der maschinellen Identifikation der Strichcodierungen kommen. Darüber hinaus können bei Gerätetypen verschiedener Hersteller spezifische Unterschiede beim maschinellen Klartextlesen der Strichcodes auftreten, da jeder Hersteller seine Geräte nach eigenen Strichcode-Vorlagen prüft, testet und einstellt. Dabei können die Testvorlagen auf unterschiedlichen Materialien wie Glas, Film, Transparentpapier, Karton oder dgl. aufgebracht sein, die voneinander abweichende thermische, mechanische, optische Eigenschaften besitzen. Diese spezifischen Materialeigenschaften können Anlaß zu geringfügigen Abweichungen beim Klartextlesen ein-und derselben Strichcodierung durch Prüf-und Lesegeräte verschiedener Hersteller führen.

Aufgabe der Erfindung ist es, ein Verfahren zur Herstellung eines Eich-und Prüfstandardelements zu schaffen, das formbeständige, kontrastreiche Strichcodierungen zum Eichen und Prüfen von Lese-und Meßgeräten kostengünstig liefert sowie ein Eich-und Prüfstandardelement zur Verfügung zu stellen.

Diese Aufgabe wird erfindungsgemäß dadurch gelöst, daß auf einem Keramiksubstrat eine Metallschicht aufgetragen wird, daß die Metallschicht entfettet, eine Fotoresistschicht aufgebracht und durch eine Maske hindurch belichtet wird, die ein Abbild der zu übertragenden strahlungsdurchlässigen und strahlungsundurchlässigen Bereiche eines Musters trägt, daß nach dem Entfernen der Maske die Fotoresistschicht entwickelt, in einer Lösung die freigelegten Zonen der Metallschicht geätzt und die restliche Fotoresistschicht entfernt wird und daß zuletzt die freigelegten, geätzten Zonen in einem Metallbad mattschwarz eingefärbt werden. Um die Einhaltung sehr enger Maßtoleranzen zu gewährleisten, enthält das Keramiksubstrat einen Anteil gleich oder größer 96% Aluminiumoxid.

In Ausgestaltung des Verfahrens wird das Keramiksubstrat durch Trockenpressen, Stanzen aus einem keramischen Vollkörper oder durch Laserbearbeitung gefertigt.

Weitere vorteilhafte Verfahrensschritte ergeben sich aus den Maßnahmen der Patentansprüche 4 bis 12.

Das Keramiksubstrat des erfindungsgemäßen Eich-und Prüfstandardelements ist eine Aluminiumoxidkeramik, mit einem Anteil von 96 -97 % $Al_2O_3$, einer Stärke von 0,635 bis 1,27 mm, mit Abmessungen von 20 Millimetern Kantenlänge bis zu einer Größe von 100 $^x$ 100mm und trägt auf der Oberfläche ein Muster.

Die vorteilhafte Weiterbildung des Eich-und Prüfstandardelements ergibt sich aus den Merkmalen der Patentansprüche 14 bis 18.

Mit der Erfindung wird der Vorteil erzielt, daß in kostengünstiger Weise ein Eich-und Prüfstandardelement für die Eichung und Prüfung von Ablese-und Meßgeräten für Strichcodierungen bzw. für Gitterteilungen oder Belichtungstestkeile hergestellt werden kann, das sämtlichen mechanischen und optischen Anforderungen bezüglich der Maßgenauigkeit und den Kontrastunterschieden zwischen strahlungsdurchlässigen und strahlungsundurchlässigen Bereichen Genüge leistet.

Im folgenden wird das Verfahren und ein nach dem Verfahren hergestelltes Eich-und Prüfstandardelement an hand eines zeichnerisch dargestellten Ausführungsbeispiels näher erläutert.

Es zeigen:

Fig. 1 schematisch eine Ansicht des EAN-Codes,

Fig. 2 einen Ausschnitt aus einer Testvorlage für eine Druckplatte,

Fig. 3(a) bis (g) in schematischer Darstellung die einzelnen Verfahrensschritte zur Herstellung eines Eich-und Prüfstandardelements, und

Fig. 4 eine perspektivische Ansicht eines Eich-und Prüfstandardelements.

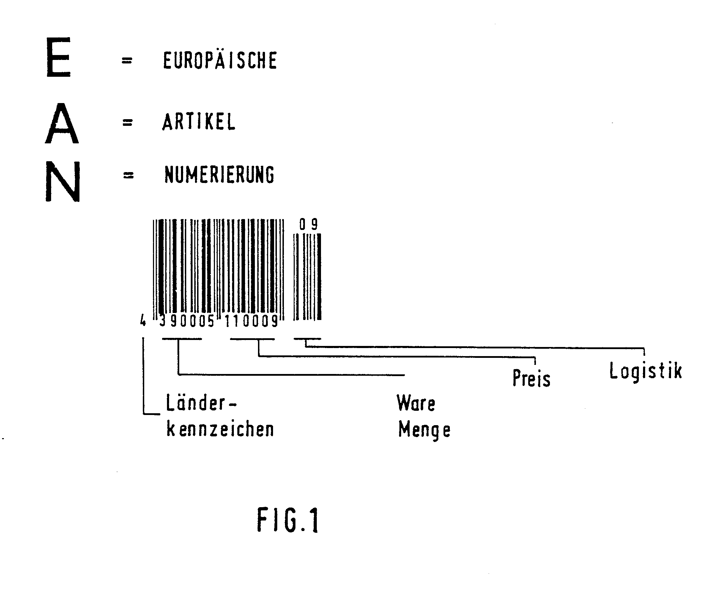

In Fig. 1 ist schematisch der EAN-Strichcode für die EUROPÄISCHE-ARTIKEL-NUMERIERUNG dargestellt, der mehrere Kennzeichnungsfelder umfaßt, beispielsweise für die Länderkennzeichnung, die Waren-und Mengekennzeichnung sowie für weitere Daten, wie z.B. das Herstellungsdatum, Ablaufdatum oder dgl. Angaben. Die unterschiedlichen Strichstärken, -abstände und -längen in den einzelnen Kennzeichnungsfeldern stellen die voranstehenden Angaben in verschlüsselter Form dar und werden beim Auslesen mittels eines Lichtstiftes oder eines Lasers entschlüsselt und als Klartext wiedergegeben. Der in Fig. 1 schematisch dargestellte EAN-Strichcode steht stellvertretend für wei tere international eingeführte Strichcodierungen, wie z.B. den JAN-Strichcode, der die JAPANISCHE-ARTIKEL-NUMERIERUNG betrifft und im asiatischen Raum weit verbreitet ist. Neben diesen Artikel-Numerierungscodes gibt es eine Anzahl von weiterer international genormter Codes, wie beispielsweise die INTERNATIONALE-STANDARDBUCH-ARTIKEL-NUMERIERUNG, ISBN-Codierung, zur Kennzeichnung von Büchern bezüglich des Verlegers, des Preises, des Artikels, Auflage-Nummer, Sprache, Erscheinungsjahr und dgl. Angaben mehr.

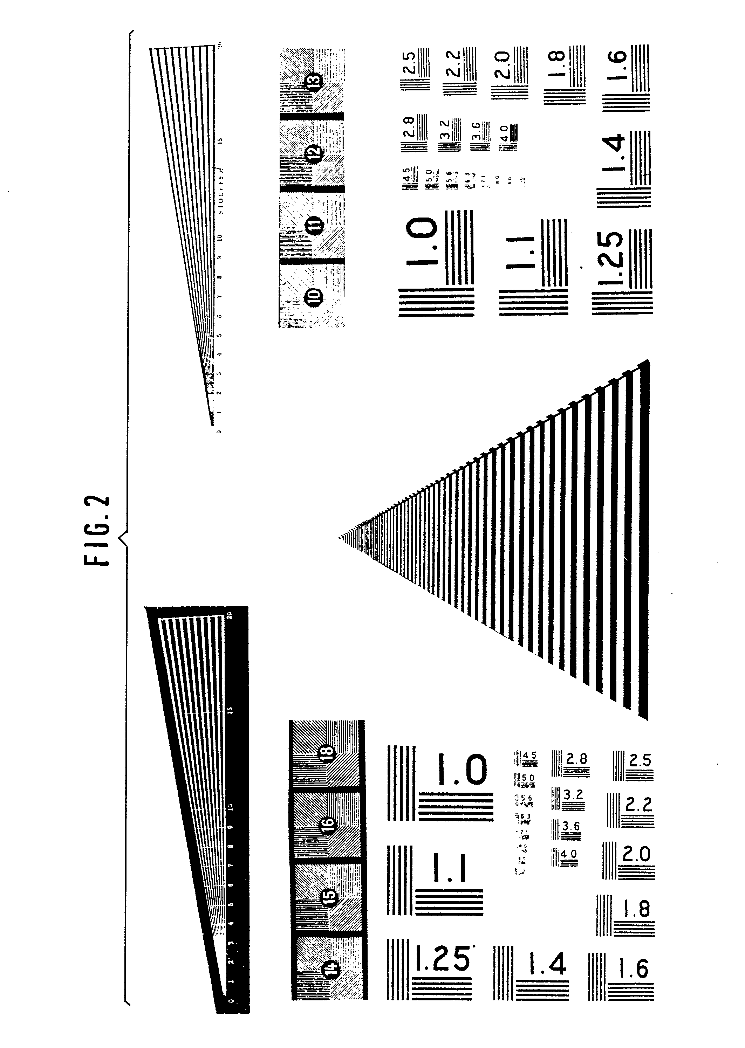

Fig. 2 zeigt schematisch einen Ausschnitt aus einer Testvorlage für eine Druckplatte, die auf diese aufbelichtet und entwickelt wird, um die zu erwartende Druckqualität prüfen und beurteilen zu können. Solche Testvorlagen können auch Belichtungstestkeile mit abgestuften Belichtungsstufen sein, wie sie in der Druck-und Reproduktionstechnik für densitometrische Messungen verwendet werden.

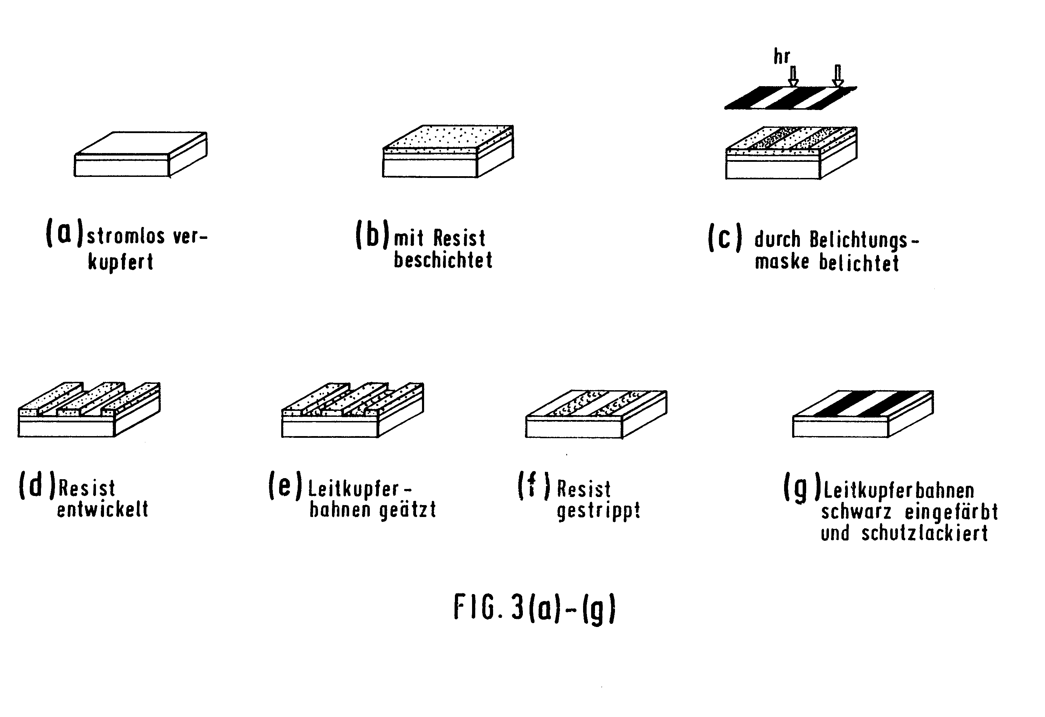

Anhand der schematischen Darstellung in den Fig. 3(a) bis (g) werden die einzelnen Verfahrensschritte zur Herstellung eines Eich-und Prüfstandardelements nach der Erfindung beschrieben. Ein Keramiksubstrat mit einem Anteil gleich oder größer als 96 % Aluminiumoxid wird im Verfahrensschritt gemäß Fig. 3 (a) stromlos metallisiert, indem das Keramiksubstrat in ein chemisch abscheidendes Metallbad, wie beispielsweise ein Kupferbad eingebracht wird. Die Metallschicht kann ebenso durch Sputtern oder Verdampfung im Vakuum aufgebracht werden. Auf der Ober fläche des Keramiksubstrats wird eine Leitkupferschicht als Metallschicht mit einer Dicke bis zu 3 μm stromlos abgeschieden. Bei dem Keramiksubstrat handelt es sich bevorzugt um einen keramischen Standardwerkstoff für die Elektronik-Industrie, wie er von der Firma HOECHST Ceram Tec für Dickfilm-und Dünnschichtschaltungen hergestellt wird. Derartige Keramiksubstrate werden unter ständiger, sehr genauer Kontrolle der Rohmaterialien und des Fertigungsprozesses unter Reinraumbedingungen mit extrem feinen Oberflächen hergestellt, die eine feinkörnige, gleichmäßige Textur besitzen. Die Herstellung des Keramiksubstrats erfolgt durch Trockenpressen, Stanzen aus einem keramischen Vollkörper oder durch Laserbearbeitung.

Die als Leitkupferschicht auf der Oberfläche des Keramiksubstrats abgeschiedene Metallschicht wird entfettet und im Verfahrensschritt gemäß Fig. 3 (b) mit einer positiv oder negativ arbeitenden Fotoresistschicht überzogen. Im vorliegenden Fall wird bevorzugt ein positiv arbeitender Fotoresist verwendet, dessen Löslichkeit bei Strahlungseinwirkung in den bestrahlten Bereichen erhöht wird.

Im Verfahrensschritt nach Fig. 3 (c) wird die Fotoresistschicht mit einer Foto-bzw. Bestrahlungsmaske überdeckt, die ein Abbild der zu übertragenden strahlungsdurchlässigen und strahlungsundurchlässigen Bereiche eines Musters trägt. Bei diesem Muster handelt es sich um einen international eingeführten Strichcode, wie bei spielsweise den EAN-Strichcode gemäß Fig. 1, wobei jedoch die einzelnen Kennzeichnungsfelder dieses Codes einer festgelegten Norm entsprechen. Diese Norm kann u.a. so ausgestaltet sein, daß in jedem Kennzeichnungsfeld des Strichcodes die Zahlen 0 bis 9 in aufsteigender oder absteigender Reihenfolge enthalten sind oder daß in jedem Kennzeichnungsfeld nur die Ziffern Null oder eine sonstige Ziffer zwischen 1 und 9 ausschließlich enthalten sind.

Die Bestrahlung durch die Bestrahlungsmaske ändert die Löslichkeit der Fotoresistschicht unter den transparenten Zonen der Maske in der Weise, daß bei einer Positiv-Fotoresistschicht die Löslichkeit der Resistschicht unter den transparenten Zonen der Belichtungsmaske ansteigt, d.h. die Fotoresistschicht bei dem anschliessenden Entwickeln mit einer entsprechenden Entwicklerflüssigkeit selektiv entfernt wird, um dort die Substratoberfläche freizulegen und sie dadurch einer weiteren selektiven Bearbeitung zugänglich zu machen. Dieser Entwicklungsschritt ist in Fig. 3 (d) schematisch wiedergegeben. Handelt es sich um einen negativ arbeitenden Fotoresist, so wird die Resistschicht unter den transparenten Zonen der Bestrahlungsmaske gehärtet, so daß nach dem Entfernen der Maske der Entwickler diejenigen Bereiche der Fotoresistschicht selektiv entfernt, die sich während der Belichtung unterhalb der nicht durchlässigen Zonen der Bestrahlungsmaske befanden. Somit entsprechen bei positiv arbeitenden Fotoresist die freigelegten, ungeschützten Substratflächen den transparenten Zonen der Bestrahlungsmaske, bei negativ arbeitenden Fotoresist den strahlungsundurchlässigen Bereichen der Maskenstruktur.

In Fig. 3 (e) ist der nächste Verfahrensschritt dargestellt, bei dem in einer Lösung die freigelegten Zonen der Metallschicht geätzt werden. Hierfür wird beispielsweise eine kalte Eisen-III-chloridlösung verwendet, welche die freigelegten Metallbahnen in der entwickelten Fotoresistschicht ätzt. Ebenso kann das Ätzen in saurer oder ammoniakalischer Kupferlösung erfolgen. Im Anschluß daran wird die restliche Fotoresistschicht durch Strippen entfernt, wie dies in Fig. 3 (f) dargestellt ist. Im letzten Verfahrensschritt gemäß Fig. 3 (g) werden die freigelegten, geätzten Stege der Metallbahnen eingefärbt, insbesondere geschwärzt, indem beispielsweise das Werkstück in einem Metallbad aus Nickel, mit entsprechenden chemischen Zusätzen für die Kornverfeinerung von Nickel, galvanisiert wird. Dabei wird auf den freigelegten, geätzten Metallbahnen, z.B. aus Kupfer, feinkörniges, schwarzmattes Nickel abgeschieden. Eine Einfärbung kann auch stromlos vorgenommen werden, indem das Werkstück in eine Natriumchloritlösung eingebracht wird, in der Trinatriumphosphat und Natriumhydroxid enthalten sind. Die geätzten, freigelegten Kupferbahnen werden in einer derartigen Lösung in einer Dicke von 1 bis 2 μm

stromlos schwarzoxidiert. Nach der Einfärbung der Kupferbahnen werden diese schutzlackiert, beispielsweise durch Auftragen einer Silikatschutzschicht.

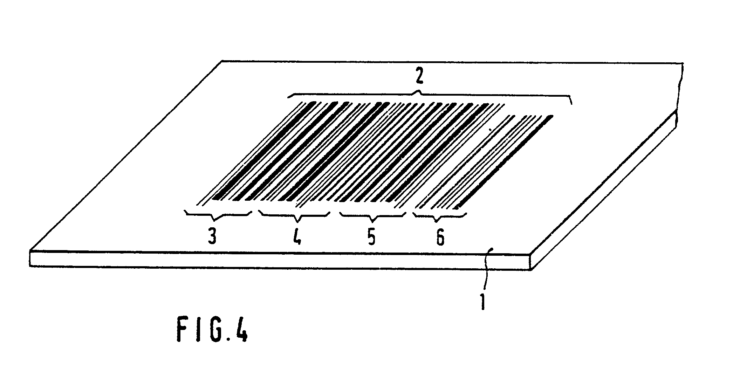

Fig. 4 zeigt in perspektivischer Ansicht ein Eich-und Prüfstandardelement, das nach dem voranstehend beschriebenen Verfahren hergestellt wurde. Das Keramiksubstrat 1 besteht aus einer Aluminiumoxidkeramik, die einen Anteil von 96 bis 97 % Al₂O₃ hat. Die Stärke des Keramiksubstrats 1 beträgt 0,635 mm. Zur Auswahl stehen des weiteren Keramiksubstrate mit einer Stärke von 1,016 mm bis 1,270 mm. Selbstverständlich können auch Keramiksubstrate mit anderen als den angegebenen Stärken hergestellt werden. Die Abmessungen des Keramiksubstrats 1 reichen von 20 mm Kantenlänge bis zu einer Größe von 100 × 100mm und liegen insbesondere im Bereich von 50 × 50 mm. Auf der Oberfläche des Keramiksubstrats ist ein Muster in Gestalt eines mattschwarzen Strichmusters 2 angeordnet, das mehrere Kennzeichnungsfelder 3,4,5,6,... enthält, von denen jedes eine vorgegebene Kennung aufweist. Die Einteilung und Reihenfolge der Kennzeichnungsfelder entsprechen beispielsweise dem Code der EUROPÄISCHEN-ARTIKEL-NUMERIERUNG bzw. dem EAN-Code oder dem Code der JAPANISCHEN-ARTIKEL-NUMERIERUNG bzw. dem JAN-Strichcode, der mit Ausnahme der Länderkennung im wesentlichen mit dem EAN-Strichcode übereinstimmt. Selbstverständlich kann auch die Einteilung und Reihenfolge der Kennzeichnungsfelder einem sonstigen genormten Strichcode entsprechen. Wird das Eich-und Prüfstandardelement für einen der voranstehend angeführten Strichcodes ausgelegt, dann sind die Kennungen in den einzelnen Kennzeichnungsfeldern genormt, beispielsweise in der Weise, daß in den einzelnen Kennzeichnungsfeldern in aufsteigender oder absteigender Reihenfolge die Ziffern 0 bis 9 enthalten sind, jedoch ist es auch denkbar, in jedem Kennzeichnungsfeld nur die Ziffern Null oder eine sonstige Zahl zwischen 1 und 9 anzubringen.

Das Keramiksubstrat 1 des Eich-und Prüfstandardelements besitzt mechanische und optische Eigenschaften, die weitgehend temperaturunabhängig sind, so daß die Abmessungen des Elements über große Temperaturbereiche konstant sind. Durch das Verfahren zum Aufbringen des Musters auf der Oberfläche des Elements ist sichergestellt, daß die Maßgenauigkeit der Strichcodierungen, die optischen Eigenschaften, die Dicken der Striche bzw. Balken, die Abstände zwischen den einzelnen Strichen über lange Zeitspannen hinweg unverändert bleiben und somit alle Anforderungen an ein Standardelement erfüllen.

Das Eich-und Prüfstandardelement kann ebenso für densitometrische Messungen in der Druck-und Reproduktionstechnik eingesetzt werden. Das Muster auf der Oberfläche des Keramiksubstrats 1 besteht dann aus Gittergruppen, Netz-, Stern-, Strichteilungen, Liniengruppen, Winkelteilungen, Punktrastern oder einer Kombination derartiger Prüfteilungen, von denen einige in dem Ausschnitt aus der Testvorlage nach Fig. 2 schematisch angedeutet sind.

Der Einsatz eines derartigen Eich-und Prüfstandardelements für Strichcodes erfolgt beispielsweise in der Weise, daß täglich zu Arbeitsbeginn jedes Prüfgeräts bzw. jeder Datenkasse, die einen Scanner eingebaut hat oder mit einem Lichtstift verbunden ist, zunächst auf ihre Ablesegenauigkeit geprüft wird, indem das Eich-und Prüfstandardelement abgetastet wird und die Prüfung erfolgt, ob der Scanner bzw. der Lichtstift die aufgeprägte Norm auf dem Standardelement richtig wiedergibt. Nach dem sogenannten Eichvorgang der einzelnen Datenkasse bzw. des Prüfgeräts sind diese erst betriebsbereit. Durch entsprechende Programmierung der Datenkassen und Prüfgeräte kann erreicht werden, daß diese nur nach durchgeführter Überprüfung mittels des Standardelements betriebsbereit sind.

## Ansprüche

1. Verfahren zum Herstellen eines Eich-und Prüfstandardelements für die Eichung und Prüfung von Ablese-und Meßgeräten, dadurch gekennzeichnet, daß auf einem Keramiksubstrat eine Metallschicht aufgetragen wird, daß die Metallschicht entfettet, eine Fotoresistschicht aufgebracht und durch eine Maske hindurch belichtet wird, die ein Abbild der zu übertragenden strahlungsdurchlässigen und strahlungsundurchlässigen Bereiche eines Musters trägt, daß nach dem Entfernen der Maske die Fotoresistschicht entwickelt, in einer Lösung die freigelegten Zonen der Metallschicht geätzt und die restliche Fotoresistschicht entfernt wird und daß zuletzt die freigelegten, geätzten Zonen in einem Metallbad mattschwarz eingefärbt werden.

2. Verfahren nach Anspruch 1, dadurch gekennzeichnet, daß das Keramiksubstrat einen Anteil gleich oder größer 96 % Aluminiumoxid enthält.

3. Verfahren nach Anspruch 2, dadurch gekennzeichnet, daß das Keramiksubstrat durch Trockenpressen, Stanzen aus einem keramischen Vollkörper oder durch Laserbearbeitung gefertigt wird.

4. Verfahren nach Anspruch 1, dadurch gekennzeichnet, daß der Auftrag der Metallschicht in einem chemisch abscheidenden Metallbad erfolgt.

5. Verfahren nach Anspruch 1, dadurch gekennzeichnet, daß die Metallschicht durch Sputtern oder Bedampfen im Vakuum aufgebracht wird.

6. Verfahren nach Anspruch 4, dadurch gekennzeichnet, daß das chemisch abscheidende Metallbad ein Kupferbad ist, in dem eine Leitkupferschicht als Metallschicht mit einer Dicke bis zu 5 $\mu$m, insbesondere 3 $\mu$m, auf der Oberfläche des Keramiksubstrats stromlos abgeschieden wird.

7. Verfahren nach Anspruch 1, dadurch gekennzeichnet, daß zum Ätzen und Freilegen der Zonen der Metallschicht eine Metallchloridlösung verwendet wird.

8. Verfahren nach Anspruch 7, dadurch gekennzeichnet, daß die Fotoresistschicht aus einem positiv arbeitenden Fotoresist besteht und daß mit einer kalten Eisen-III-chloridlösung freigelegte Leitkupferbahnen der entwikkelten Fotoresistschicht geätzt werden.

9. Verfahren nach Anspruch 1, dadurch gekennzeichnet, daß zum Ätzen und Freilegen der Zonen der Metallschicht eine ammoniakalische Kupferlösung verwendet wird.

10. Verfahren nach Anspruch 8, dadurch gekennzeichnet, daß in einem Metallbad aus Nickel, mit chemischen Zusätzen für die Kornverfeinerung von Nickel, die freigelegten Leitkupferbahnen mit feinkörnigem, mattem Nickel galvanisiert werden.

11. Verfahren nach Anspruch 8, dadurch gekennzeichnet, daß die freigelegten Leitkupferbahnen in einer Natriumchloritlösung, in der Trinatriumphosphat und Natriumhydroxid enthalten sind, in einer Dicke von 1 bis 2 $\mu$m stromlos - schwarzoxidiert werden.

12. Verfahren nach Anspruch 10 oder 11, dadurch gekennzeichnet, daß auf die Leitkupferbahnen eine Silikatschutzschicht aufgetragen wird.

13. Eich-und Prüfstandardelement, hergestellt nach dem Verfahren gemäß den Ansprüchen 1 bis 12, dadurch gekennzeichnet, daß das Keramiksubstrat (1) eine Aluminiumoxidkeramik, mit einem Anteil von 96 -97 % Al$_2$O$_3$, einer Stärke von 0,635 bis 1,27 mm, mit Abmessungen von 20 Millimetern Kantenlänge bis zu einer Größe von 100 $^\times$ 100 mm ist und auf der Oberfläche ein Muster trägt.

14. Eich-und Prüfstandardelement nach Anspruch 13, dadurch gekennzeichnet, daß das Muster in Gestalt eines mattschwarzen Strichmusters (2) angeordnet ist, daß das Strichmuster in mehrere Kennzeichnungsfelder (3,4,5,6) unterteilt ist und daß jedes der Kennzeichnungsfelder eine vorgegebene Kennung enthält.

15. Eich-und Prüfstandardelement nach Anspruch 14, dadurch gekennzeichnet, daß die Einteilung und Reihenfolge der Kennzeichnungsfelder dem Code der Europäischen-Artikel-Numerierung bzw. dem EAN-Strichcode entspricht.

16. Eich-und Prüfstandardelement nach Anspruch 14, dadurch gekennzeichnet, daß die Einteilung und Reihenfolge der Kennzeichnungsfelder dem Code der Japanischen-Artikel-Numerierung bzw. dem JAN-Strichcode entspricht.

17. Eich-und Prüfstandardelement nach Anspruch 14, dadurch gekennzeichnet, daß die Einteilung und Reihenfolge der Kennzeichnungsfelder einem genormten Strichcode entspricht.

18. Eich-und Prüfstandardelement nach Anspruch 13, dadurch gekennzeichnet, daß das Muster aus Gittergruppen, Netzteilungen, Sternteilungen, Strichteilungen, Liniengruppen, Winkelteilungen, Punktrastern oder einer Kombination derartiger Prüfteilungen besteht.

E = EUROPÄISCHE

A = ARTIKEL

N = NUMERIERUNG

```
4  390005 110009        0 9
```

Länderkennzeichen

Ware
Menge

Preis

Logistik

FIG.1

HOECHST AKTIENGESELLSCHAFT - 85/K 098

# FIG.2

HOECHST AKTIENGESELLSCHAFT — 85/K 098

0 226 144

**(a)** stromlos verkupfert

**(b)** mit Resist
beschichtet

hr

**(c)** durch Belichtungsmaske belichtet

**(d)** Resist
entwickelt

**(e)** Leitkupferbahnen geätzt

**(f)** Resist
gestrippt

**(g)** Leitkupferbahnen
schwarz eingefärbt
und schutzlackiert

FIG. 3(a)-(g)

FIG.4